# EUROPEAN PATENT APPLICATION

(11) **EP 4 715 584 A1**
(43) Date of publication of application: **25.03.2026**
(21) Application number: 24829901.8
(22) Date of filing: 29.02.2024
(51) Int. Cl.: G06F 9/445

(54) **DYNAMIC LOADING METHOD AND ELECTRONIC DEVICE**

(30) Priority: 30.06.2023 CN 202310808428
(71) Applicant: Huawei Technologies Co., Ltd., Shenzhen, Guangdong 518129 (CN)
(72) Inventor: ZHOU, Jingqiang, Shenzhen, Guangdong 518129 (CN); ZHENG, Liming, Shenzhen, Guangdong 518129 (CN); LIU, Dongxu, Shenzhen, Guangdong 518129 (CN); CHEN, Xin, Shenzhen, Guangdong 518129 (CN); ZHONG, Jubin, Shenzhen, Guangdong 518129 (CN); WANG, Xu, Shenzhen, Guangdong 518129 (CN); REN, Yuxin, Shenzhen, Guangdong 518129 (CN)
(74) Representative: Gill Jennings & Every LLP
(86) International application number: PCT/CN2024/079257
(87) International publication number: WO 2025/001245

(57) **Abstract**

This application provides a dynamic loading method and an electronic device. The method includes: parsing one or more target files, and storing one or more first parsing results, where the one or more first parsing results are in a one-to-one correspondence with the one or more target files, the one or more target files include a first target file, and the first target file is an executable file or a dynamic library file; searching the one or more first parsing results for a first parsing result of a dynamic library file on which a first executable file depends; and mapping, based on the first parsing result of the dynamic library file on which the first executable file depends, the dynamic library file on which the first executable file depends into process address space in which the first executable file is located. Based on this solution, one or more parsing results can be shared. This helps optimize a startup speed of an application, save computing resources, save internal memory space, and improve performance of an electronic device, thereby improving user experience.

## Description

This application claims priority to Chinese Patent Application No. 202310808428.8, filed with the China National Intellectual Property Administration on June 30, 2023 and entitled "DYNAMIC LOADING METHOD AND ELECTRONIC DEVICE", which is incorporated herein by reference in its entirety.

### TECHNICAL FIELD

This application relates to the computer field, and more specifically, to a dynamic loading method and an electronic device.

### BACKGROUND

The dynamic loading technology means that one or more library files are dynamically loaded to an internal memory during running of a program, and functions and variables in the library files are mapped into process address space of the program, for the program to invoke. The dynamic loading technology can cause the program to load library files as required during running, instead of linking all library files to the program during compilation, thereby saving internal memory space and improving flexibility of an application.

However, dynamic library loading of different applications is independent of each other. Each time a new application is started, complete dynamic loading may need to be performed, a startup speed is low, and a lot of redundant calculation is caused.

### SUMMARY

This application provides a dynamic loading method and an electronic device, to implement sharing of one or more parsing results. This helps optimize a startup speed of an application, save computing resources, save internal memory space, and improve performance of an electronic device, thereby improving user experience.

According to a first aspect, a dynamic loading method is provided, and the method includes: parsing one or more target files, and storing one or more first parsing results, where the one or more first parsing results are in a one-to-one correspondence with the one or more target files, the one or more target files include a first target file, and the first target file is an executable file or a dynamic library file; searching the one or more first parsing results for a first parsing result of a dynamic library file on which a first executable file depends; and mapping, based on the first parsing result of the dynamic library file on which the first executable file depends, the dynamic library file on which the first executable file depends into process address space in which the first executable file is located.

It should be understood that the one or more target files may include the first target file, and the first target file may be the executable file or the dynamic library file.

It should be understood that there may be a dependency relationship or no dependency relationship between the one or more target files. This is not limited in embodiments of this application.

It should be noted that, the first executable file may be, for example, an executable file that is of an application and that is loaded in a user process, and the process address space is internal memory space allocated by a system to the user process.

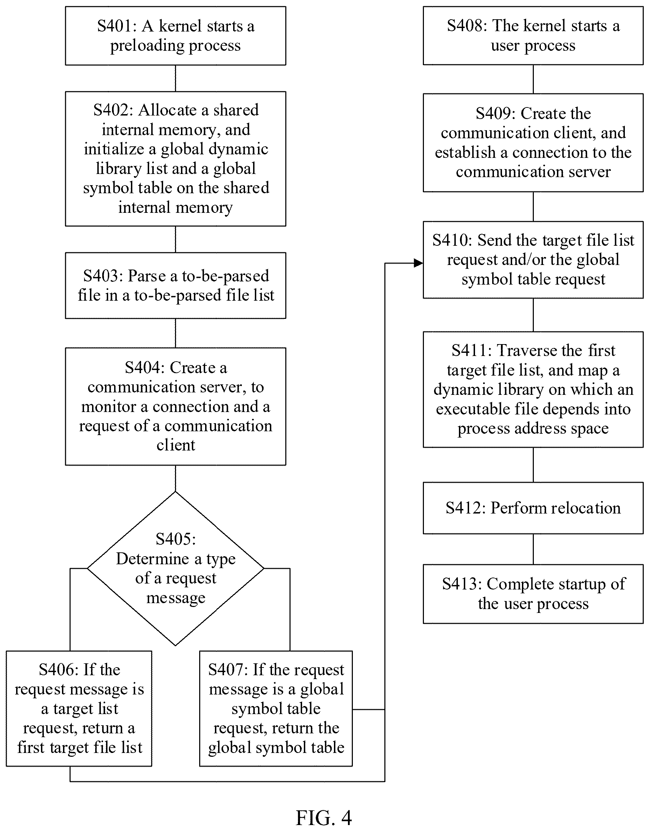

It should be noted that the first parsing result may be, for example, a format parsing result in an embodiment shown in FIG. 4, and the one or more first parsing results may be, for example, stored in a form of global target file list in the embodiment shown in FIG. 4.

In this embodiment of this application, when the target files are parsed, the first parsing results of the target files may be stored. These first parsing results are used in loading processes of dynamic libraries, to implement decoupling between parsing processes and loading processes of the target files, thereby helping optimize a startup speed of an application and improving user experience. In another aspect, a first parsing result of one target file may be used in loading processes of a plurality of different executable files, to implement sharing of the one or more first parsing results. This helps save computing resources and internal memory space. In addition, the user may perform an operation such as adding, deleting, or modifying on the one or more stored first parsing results, thereby improving flexibility of dynamic loading.

With reference to the first aspect, in some implementations of the first aspect, the one or more target files include a first dynamic library file, and the first parsing result includes a path, a mapping range, and dependency information of the first dynamic library file.

It should be understood that the first parsing result of the first dynamic library file may include the name, the path, the mapping range, and the dependency information of the first dynamic library file. The path of the first dynamic library file may indicate a location at which the first dynamic library file is stored in a disk. The dependency information of the first dynamic library file may indicate a dynamic library file on which the first dynamic library file depends, including a dynamic library file on which the first dynamic library file directly depends and a dynamic library file on which the first dynamic library file indirectly depends. The mapping range of the first dynamic library file may indicate a range of files that are of the first dynamic library file and that need to be mapped into the process address space, namely, to-be-loaded content of the first dynamic library file.

In this embodiment of this application, the one or more first parsing results may include paths, mapping ranges, and dependency information of the one or more target files, so that dynamic library files and dynamic library files on which the dynamic library files depend can be quickly found, and mapping ranges of these dynamic library files are determined, thereby helping improve the startup speed of the application. In addition, because the one or more first parsing results may be shared, the computing resources are saved.

With reference to the first aspect, in some implementations of the first aspect, the dynamic library file on which the first executable file depends includes the first dynamic library file, and mapping, based on the first parsing result of the dynamic library file on which the first executable file depends, the dynamic library file on which the first executable file depends into the process address space in which the first executable file is located includes: obtaining the first dynamic library file based on the path of the first dynamic library file; and mapping the first dynamic library file into the process address space based on the mapping range of the first dynamic library file.

With reference to the first aspect, in some implementations of the first aspect, the first target file is a file in a to-be-parsed file list, and a file in the to-be-parsed file list is a file that needs to be parsed before the first executable file is loaded into the process address space.

It should be noted that the file in to-be-parsed file list may be a file configured by the user, or may be a default file that needs to be pre-parsed.

It should be noted that the one or more target files may be files in the to-be-parsed file list, or may not be files in the to-be-parsed file list. For example, when a second executable file is started, a dynamic loader may need to parse the second executable file and a dynamic library file on which the second executable file depends. In this case, a first parsing result of the second executable file and a first parsing result of the dynamic library file on which the second executable file depends may be stored, so that when another executable file is loaded, a first parsing result of a dynamic library file required by the another executable file is searched.

In this embodiment of this application, first parsing results of files in the to-be-parsed file list and first parsing results of dynamic libraries on which the files depend may be obtained and stored by pre-parsing the files in the to-be-parsed file list. These first parsing results are used in loading processes of the dynamic libraries, to implement decoupling between parsing processes and loading processes of the target files, thereby helping optimize the startup speed of the application and improving user experience. In another aspect, a first parsing result of one target file may be used in loading processes of a plurality of different executable files, to implement sharing of the one or more first parsing results. This helps save the computing resources and the internal memory space.

With reference to the first aspect, in some implementations of the first aspect, the method further includes: searching the one or more first parsing results for first parsing results of a second dynamic library file and a dynamic library file on which the second dynamic library file depends, where the second dynamic library file is a specified dynamic library file that a process in which the first executable file is located requests to load; and mapping, based on the first parsing results of the second dynamic library file and the dynamic library file on which the second dynamic library file depends, the second dynamic library file and the dynamic library file on which the second dynamic library file depends into the process address space.

In this embodiment of this application, the specified dynamic library file can be loaded based on the first parsing results of the specified dynamic library file and the dynamic library file on which the specified dynamic library file depends, which helps optimize the startup speed of the application and improve user experience.

With reference to the first aspect, in some implementations of the first aspect, the method further includes: if the first parsing result of the dynamic library file on which the first executable file depends is not found, parsing the first executable file, and storing a first parsing result of the first executable file and a first parsing result of the dynamic library file on which the first executable file depends; and/or
if the parsing result of the second dynamic library file is not found, parsing the second dynamic library file, and storing a first parsing result of the second dynamic library file and a first parsing result of the dynamic library file on which the second dynamic library file depends.

It should be understood that the dynamic library file on which the first executable file depends and the specified dynamic library both belong to dynamic libraries required during running of the first executable file.

In this embodiment of this application, if the dynamic library required during running of the first executable file is not parsed, the dynamic library required during running of the first executable file may be parsed based on a conventional method, and a corresponding first parsing result is stored, to optimize a startup speed of an application that subsequently depends on the dynamic library file, thereby improving user experience.

With reference to the first aspect, in some implementations of the first aspect, parsing the one or more target files, and storing the one or more first parsing results includes: parsing the one or more target files in multi-thread parallelism, and storing the one or more first parsing results.

In this embodiment of this application, the one or more target files are parsed in multi-thread parallelism, so that a parsing speed can be accelerated, and the computing resources can be fully utilized.

With reference to the first aspect, in some implementations of the first aspect, the dynamic library file on which the first executable file depends includes a third dynamic library file and a fourth dynamic library file, and mapping, based on the first parsing result of the dynamic library file on which the first executable file depends, the dynamic library file on which the first executable file depends into the process address space in which the first executable file is located includes: A first thread maps, based on a first parsing result of the third dynamic library file, the third dynamic library file into the process address space in which the first executable file is located; and
a second thread maps the fourth dynamic library file into the process address space based on a first parsing result of the fourth dynamic library file, where the first thread is different from the second thread.

In this embodiment of this application, a plurality of dynamic library files may also be loaded in multi-thread parallelism, to accelerate the loading speed, help optimize the startup speed of the application, and help improve user experience.

With reference to the first aspect, in some implementations of the first aspect, the method further includes:
parsing the one or more target files, and storing information about one or more symbols, where the one or more symbols are symbols defined in the one or more target files, the one or more symbols include a first symbol, and information about the first symbol includes a name of a target file to which the first symbol belongs and location information of the first symbol in the target file to which the first symbol belongs.

In this embodiment of this application, when the target file is parsed, information about a symbol defined in the target file may be stored. When a to-be-relocated symbol is relocated, a location of the to-be-relocated symbol in the process address space can be quickly found, thereby accelerating a relocation process, helping optimize the startup speed of the application, and helping improve user experience. In another aspect, the information about the one or more symbols may be used in relocation processes of a plurality of different executable files, to implement sharing of the information about the one or more symbols. This helps save computing resources and internal memory space.

With reference to the first aspect, in some implementations of the first aspect, the dynamic library file on which the first executable file depends includes a fifth dynamic library file, a relocation table of the fifth dynamic library file includes a second symbol, and the method further includes: after the dynamic library file on which the first executable file depends is mapped into the process address space in which the first executable file is located, searching the information about the one or more symbols for information about the second symbol, where the information about the second symbol is used to relocate the second symbol.

With reference to the first aspect, in some implementations of the first aspect, the method further includes: obtaining an address of the second symbol in the process address space based on the information about the second symbol; and relocating the second symbol based on the address of the second symbol in the process address space.

With reference to the first aspect, in some implementations of the first aspect, the method further includes: when the first executable file and the dynamic library file on which the first executable file depends are not in a parsed file list, parsing the first executable file and the dynamic library file on which the first executable file depends, and storing information about symbols defined in the first executable file and the dynamic library file on which the first executable file depends, where the parsed file list is used to store a name of a parsed executable file or dynamic library file.

With reference to the first aspect, in some implementations of the first aspect, parsing the one or more target files, and storing the information about the one or more symbols include: parsing the one or more target files in multi-thread parallelism, and storing the information about the one or more symbols.

According to a second aspect, a dynamic loading method is provided. The method includes: parsing one or more target files, and storing information about one or more symbols, where the one or more symbols are symbols defined in the one or more target files, and the one or more symbols include a first symbol; information about the first symbol includes a name of a target file to which the first symbol belongs and location information of the first symbol in the target file to which the first symbol belongs, the one or more target files include a first target file, and the first target file is an executable file or a dynamic library file; and searching the information about the one or more symbols for information about a second symbol, where the second symbol is a symbol in a relocation table of a dynamic library file on which a first executable file depends, and the information about the second symbol is used to relocate the second symbol.

It should be understood that the one or more target files may include the first target file, and the first target file may be the executable file or the dynamic library file.

It should be understood that there may be a dependency relationship or no dependency relationship between the one or more target files. This is not limited in embodiments of this application.

In this embodiment of this application, the one or more symbols are symbols defined in the one or more target files, and include all symbols defined in each target file.

It should be noted that, the first executable file may be, for example, an executable file that is of a program and that is loaded in a user process, and process address space is internal memory space allocated by a system to the user process.

It should be noted that information about each symbol may be, for example, a symbol parsing result in the embodiment shown in FIG. 4, and the information about the one or more symbols may be stored, for example, in a form of global symbol table in the embodiment shown in FIG. 4.

In this embodiment of this application, when the target file is parsed, information about a symbol defined in the target file may be stored. When a to-be-relocated symbol is relocated, a location of the to-be-relocated symbol in the process address space can be quickly found, thereby accelerating a relocation process, helping optimize a startup speed of an application, and helping improve user experience. In another aspect, the information about the one or more symbols may be used in relocation processes of a plurality of different executable files, to implement sharing of the information about the one or more symbols. This helps save computing resources and internal memory space.

With reference to the second aspect, in some implementations of the first aspect, the method further includes:
obtaining, based on the information about the second symbol, an address of the second symbol in process address space in which the first executable file is located; and relocating the second symbol based on the address of the second symbol in the process address space.

With reference to the second aspect, in some implementations of the first aspect, the first target file is a file in a to-be-parsed file list, and a file in the to-be-parsed file list is a file that needs to be parsed before the first executable file is loaded into the process address space.

It should be noted that the file in to-be-parsed file list may be a file configured by the user, or may be a default file that needs to be pre-parsed.

It should be noted that the one or more target files may be files in the to-be-parsed file list, or may not be files in the to-be-parsed file list.

With reference to the second aspect, in some implementations of the first aspect, the method further includes: when the first executable file or the dynamic library file on which the first executable file depends is not in a parsed file list, parsing the first executable file and the dynamic library file on which the first executable file depends, and storing information about symbols defined in the first executable file and the dynamic library file on which the first executable file depends, where the parsed file list is used to store a name of a parsed executable file or dynamic library file.

With reference to the second aspect, in some implementations of the first aspect, parsing the one or more target files, and storing the information about the one or more symbols include: parsing the one or more target files in multi-thread parallelism, and storing the information about the one or more symbols.

According to a third aspect, an embodiment of this application provides an electronic device. The electronic device includes one or more processors and one or more memories. The one or more memories store one or more computer programs, the one or more computer programs include instructions, and when the instructions are executed by the one or more processors, the foregoing aspects or any one of the possible implementations of the foregoing aspects is performed.

According to a fourth aspect, a chip is provided. The chip includes a processor and a communication interface. The communication interface is configured to receive a signal and transmit the signal to the processor. The processor processes the signal, so that the method according to the first aspect and any one of the possible implementations of the first aspect is performed, or the method according to the second aspect and any one of the possible implementations of the second aspect is performed.

According to a fifth aspect, a computer-readable storage medium is provided, including computer instructions. When the computer instructions are run on an electronic device, the electronic device is enabled to perform the method according to the first aspect or any one of the possible implementations of the first aspect, or perform the method according to the second aspect or any one of the possible implementations of the second aspect.

According to a sixth aspect, a computer program product is provided. The computer program product includes computer program code, and when the computer program code is run, the method according to the first aspect and any one of the possible implementations of the first aspect is implemented, or the method according to the second aspect or any one of the possible implementations of the second aspect is implemented.

According to a seventh aspect, an embodiment of this application provides an electronic device. The electronic device includes modules/units that perform the method according to the foregoing aspects or any one of the possible designs of the foregoing aspects. These modules/units may be implemented by hardware, or may be implemented by executing corresponding software by hardware.

### BRIEF DESCRIPTION OF DRAWINGS

FIG. 1 is a diagram of a structure of an electronic device according to an embodiment;
FIG. 2 is a block diagram of a software structure of an electronic device according to an embodiment of this application;
FIG. 3 is a diagram of a system architecture for dynamic loading according to an embodiment of this application;
FIG. 4 is a schematic flowchart of a dynamic loading method according to an embodiment of this application;
FIG. 5 is a schematic flowchart of a dynamic loading method according to an embodiment of this application;
FIG. 6 is a schematic flowchart of a dynamic loading method according to an embodiment of this application;
FIG. 7 is a schematic flowchart of a dynamic loading method according to an embodiment of this application; and
FIG. 8 is a diagram of a hardware structure of an apparatus according to an embodiment of this application.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes the technical solutions in this application with reference to the accompanying drawings.

The following describes the electronic device and embodiments for using such an electronic device. In some embodiments, the electronic device may be a portable electronic device that further includes another function like a personal digital assistant function and/or a music player function, for example, a mobile phone, a tablet computer, or a wearable electronic device (for example, a smartwatch) having a wireless communication function. An example embodiment of a portable electronic device includes but is not limited to a portable electronic device using iOS^{®}, Android^{®}, Microsoft^{®}, OpenHarmony^{®}, or another operating system. The portable electronic device may alternatively be another portable electronic device, like a laptop (Laptop). It should be further understood that, in some other embodiments, the electronic device may not be the portable electronic device but a desktop computer.

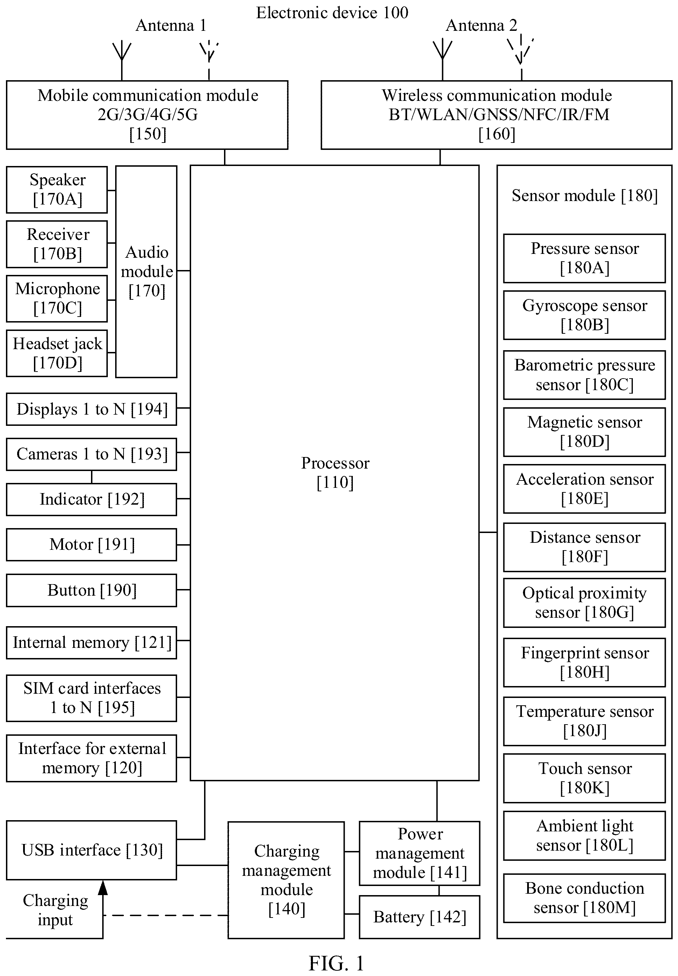

For example, FIG. 1 is a diagram of a structure of an electronic device 100. The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The controller may generate an operation control signal based on instruction operation code and a time sequence signal, to complete control of instruction fetching and instruction execution. In some other embodiments, a memory may further be disposed in the processor 110, to store instructions and data. For example, the memory in the processor 110 may be a cache. The memory may store instructions or data that has been used or cyclically used by the processor 110. If the processor 110 needs to use the instructions or data again, the instructions or data may be directly invoked from the memory. This avoids repeated access and reduces waiting time of the processor 110, and improves data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The USB interface 130 may alternatively be configured to be connected to a headset, and play audio through the headset.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments of this application, the display 194 in FIG. 1 is foldable when the display panel is made of a material like an OLED, an AMOLED, or an FLED. Herein, that the display 194 may be foldable means that the display may be folded to any angle at any part, and may be maintained at the angle. For example, the display 194 may be folded left and right from the middle. Alternatively, the display 194 may be folded up and down from the middle.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and a skin color of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100, such as image recognition, facial recognition, speech recognition, and text understanding, can be implemented by using the NPU.

The interface for external memory 120 may be used to connect to an external memory, for example, a micro SD card or a hard disk, to extend a storage capability of the electronic device 100. The external memory communicates with the processor 110 through the interface for external memory 120, to implement a data storage function. For example, files such as music and videos are stored in the external memory card. In this embodiment of this application, the external memory connected to the interface for external memory 120 may be referred to as a secondary memory.

The internal memory 121 may be configured to store one or more computer programs. The one or more computer programs include instructions. The processor 110 may run the instructions stored in the internal memory 121, so that the electronic device 100 performs the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 100, and the like. In addition, the internal memory 121 may include a high-speed random access memory, or may include a non-volatile memory, for example, one or more magnetic disk storage devices, a flash memory component, or a universal flash storage (universal flash storage, UFS). In some embodiments, the processor 110 may run the instructions stored in the internal memory 121 and/or the instructions stored in the memory that is disposed in the processor 110, to enable the electronic device 100 to perform the method provided in embodiments of this application, other applications, and data processing. The electronic device 100 may implement audio functions, for example, music playing and weather, by using the audio module 170, the speaker 170A, the receiver 170B, the microphone 170C, the headset jack 170D, the application processor, and the like. In this embodiment of this application, the internal memory 121 may be referred to as a memory.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the messages application icon, an instruction for creating a new SMS message is performed.

The gyroscope sensor 180B may be configured to determine a motion posture of the electronic device 100. In some embodiments, an angular velocity of the electronic device 100 around three axes (that is, axes X, Y, and Z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

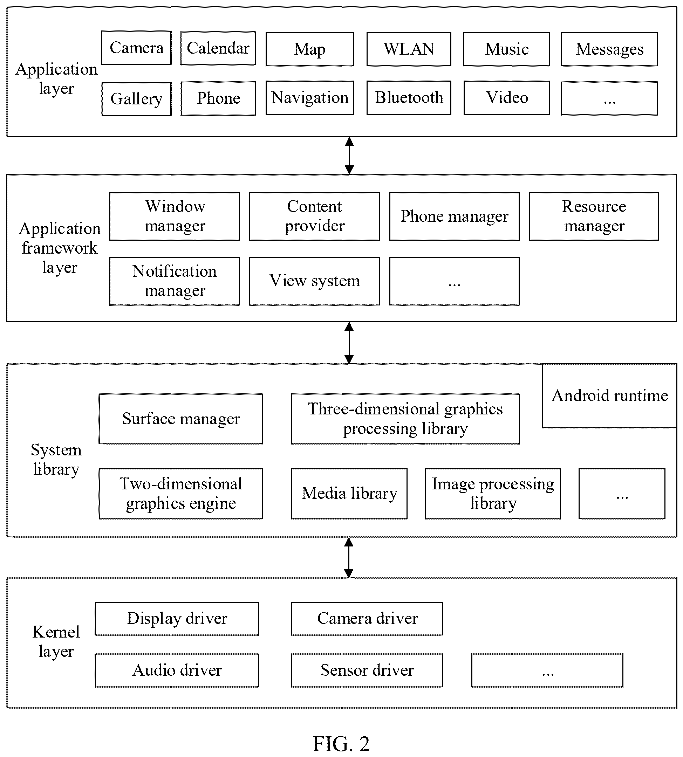

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for an application at the application layer, and the application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to: store and obtain data, and cause the data to be accessed by an application. The data may include a video, an image, audio, dialed and answered calls, a browsing history and bookmarks, an address book, and the like.

The view system includes visual controls such as a control for displaying a text and a control for displaying an image. The view system may be configured to construct an application. A display interface may include one or more views. For example, a display interface including a messages notification icon may include a text display view and an image display view.

The phone manager is configured to provide a communication function for the electronic device 100, for example, management of a call status (including answering, declining, or the like).

The resource manager provides various resources for an application, such as a localized character string, an icon, an image, a layout file, and a video file.

The notification manager causes an application to display notification information in a status bar, and may be configured to convey a notification-type message that may automatically disappear after a short pause without requiring user interaction. For example, the notification manager is configured to notify download completion, give a message notification, and the like. The notification manager may be alternatively a notification that appears in a top status bar of the system in a form of graph or scroll bar text, for example, a notification of an application running in the background, or may be a notification that appears on the display in a form of dialog window. For example, text information is displayed in the status bar, an alert tone is made, the electronic device vibrates, or the indicator light blinks.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before embodiments of this application are described, concepts related to embodiments of this application are first described.

A process (process) is a running activity that is of a computer program and that is related to a specific dataset, a basic unit for resource allocation and scheduling by a system, and a structural basis of an operating system. In an early process-oriented computer architecture, the process is a basic execution entity of a program. In a modern thread-oriented computer architecture, the process is a container for threads. The program is a description of an instruction, data, and an organizational form thereof. The process is a program entity.

A thread is sometimes referred to as a lightweight process (lightweight process, LWP), and is a minimum unit of a program execution flow. A standard thread includes a thread ID, a current instruction pointer, a register set, and a stack. In addition, the thread is an entity in a process, and is a basic unit that is independently scheduled and allocated by the system. The thread does not have system resources and has only a few necessary resources for running, but the thread can share all resources of the process with another thread in the same process. One thread can create and cancel another thread. A plurality of threads in one process can be executed concurrently.

A library file is a type of file that is on a computer and that provides ready-to-use variables, functions, or classes for a user. Library files are classified into static library files and dynamic library files, or directly referred to as a static library and a dynamic library. A difference between the static library and the dynamic library lies in a link phase of the program. The static library is copied to the program in the link phase of the program. The dynamic library is not copied to the program in the link phase. Instead, the dynamic library is dynamically loaded, by a system during running of the program, to an internal memory for the program to invoke.

An executable file is a binary file that contains program code that can be directly executed. When the executable file is running, the system creates a process and loads the executable file into process address space to implement a program function.

A symbol in a library file usually refers to a function and a variable name in the library file.

A symbol table is a data structure commonly used to store symbols (such as functions and variables) defined and referenced in dynamic libraries and related information, such as names, types, and sizes.

A relocation table is used to store a symbol that needs to be relocated in a dynamic library. Generally, if a symbol is defined in another dynamic library, the symbol needs to be relocated.

A handle is a manner for referencing or identifying an object and can be used to access or operate an underlying system resource.

When a program is started in the system, the system creates a process for the program. A process is a basic concept in the system and represents a running program instance. When the process is created, the system allocates internal memory space (namely, process address space) to the process to store information such as program code, data, and stacks. Then, the system loads an executable file of the program into the process address space and starts to execute the executable file.

The dynamic loading technology means that one or more dynamic libraries are dynamically loaded to an internal memory during running of a program, and functions and variables in the dynamic libraries are mapped into the process address space of the program for the program to invoke. The dynamic loading technology causes the program to load library files as required during running, instead of linking all library files to the program during compilation, thereby saving internal memory space and improving flexibility of the program. A component that completes the dynamic loading process is a dynamic loader (dynamic loader).

A dynamic loading process during program startup includes the following steps.
(1) A kernel initializes process address space, and maps to-be-loaded content, such as a code segment and a data segment of a binary file of a program, into the process address space.
(2) Perform dependency parsing on an executable file of the program, that is, obtain a dynamic library on which the executable file depends. For example, the dynamic library on which the executable file depends can be viewed based on content of a DT_DEEDED type in a .dynamic segment of the executable file. If the dynamic library depends on other dynamic libraries, names of the dynamic libraries on which the dynamic library depends are added to a loading set. This process is repeated until all the dynamic libraries are loaded. If a dependency relationship between the executable file and the dynamic library is considered as a tree diagram, a process of parsing the dynamic library on which the executable file depends is a process of traversing the tree diagram. For example, depth-first traversal, breadth-first traversal, or traversal in another sequence may be performed on the entire tree diagram.
(3) Search for the dynamic library on which the executable file depends, for example, search for the dynamic library in a plurality of paths such as LD_LIBRARY_PATH, /lib, /usr/lib, and a system directory.
(4) Open a found dynamic library and read elf_header information of the dynamic library to obtain a range of files to be mapped to the internal memory, namely, a mapping range.
(5) Map to-be-loaded content of the dynamic library into the process address space and add the content to a dynamic library linked list. The dynamic library linked list is maintained by the dynamic loader. The dynamic library linked list contains all library files that need to be dynamically loaded during running of the application. Each node in the dynamic library linked list indicates a dynamic library and contains some metadata of the dynamic library, such as a name of the dynamic library, a list of other dynamic libraries on which the current dynamic library depends, addresses of data and code of the dynamic library, and an address of a symbol table.
(6) Traverse the dynamic library linked list to search for an address of a to-be-relocated symbol. Before the dynamic library is loaded into the process address space, an address of the dynamic library in the process address space cannot be determined, and an address of a symbol defined in the dynamic library in the process address space cannot be determined. If another dynamic library depends on the dynamic library and references the symbol defined in the dynamic library, the program cannot determine the address of the symbol and cannot complete symbol reference. Therefore, after all dynamic libraries are loaded, a virtual address defined by the symbol in the process address space needs to be obtained, and updated to a location that references the symbol. This is relocation.
   Each dynamic library may include a relocation table, and each item in the relocation table represents a to-be-relocated symbol. The dynamic loader may traverse the relocation table to search for the to-be-relocated symbol, and determine, based on an address to which the dynamic library is mapped in the process address space, the virtual address of the to-be-relocated symbol in the process address space, to complete relocation.
(7) Complete the relocation based on the found virtual address of the to-be-relocated symbol.
(8) Execute a main function of the process to start the process.

The dynamic library loading technology has the following advantages:
(1) Internal memory space saving: The dynamic library can be loaded only when required, and all library files do not need to be linked to the program at one time, thereby saving internal memory space.
(2) Flexibility: The dynamic library can be dynamically loaded during running, and the library file can be loaded as required, making the program more flexible.
(3) Maintainability: The dynamic library can be updated and maintained independently without recompiling the entire program.
(4) Reusability: A plurality of programs can share a same dynamic library to improve code reusability.

In a word, the dynamic library loading technology is an important technology, and can make the program more flexible, save the internal memory space, and improve code maintainability and reusability.

However, in a multi-process scenario, when a new process is started, independent and complete dynamic loading may further need to be performed, which includes a large amount of redundant computing processing. This greatly wastes the computing resources.

An embodiment of this application provides a dynamic loading method. Based on the dynamic loading method, a parsing result of a dynamic library can be reused by a plurality of processes, thereby saving computing resources, reducing time required for dynamic loading, and improving program startup performance.

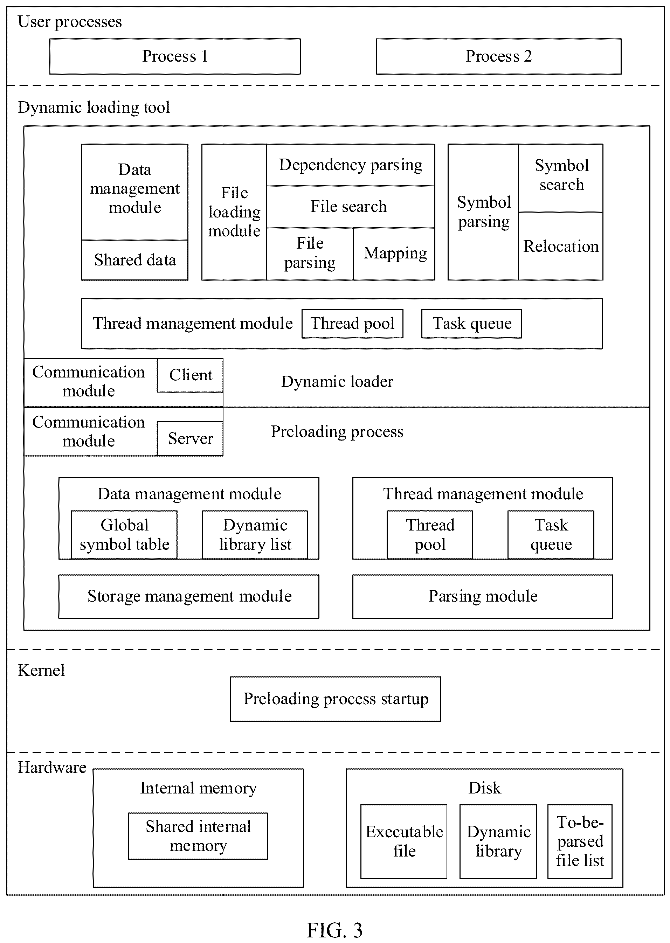

The following describes a dynamic loading method provided in an embodiment of this application with reference to FIG. 3 and FIG. 4.

FIG. 3 is a diagram of a system architecture for dynamic loading according to an embodiment of this application. FIG. 4 is a diagram of a dynamic loading method according to an embodiment of this application. The dynamic loading method shown in FIG. 4 may be applied to the system architecture shown in FIG. 3.

Refer to FIG. 3. A dynamic loading tool provided in this embodiment of this application may include two parts. One part is a preloading process, and the other part is a dynamic loader. The preloading process mainly provides a to-be-parsed file list for a user to configure which files need to be pre-loaded. The preloading process is started before all user processes are started, and a parsing result of a file in the to-be-parsed file list is stored in shared data. When the user processes are started, the shared data is shared with the user processes. The following modules are included.

A parsing module reads and parses a to-be-parsed file and a dynamic library on which the to-be-parsed file depends, and sends a parsing result to a data management module for storage.

A thread management module creates and maintains a plurality of threads, and parses to-be-parsed files in parallel based on the parsing module. The thread management module supports parallel parsing of executable files and dynamic library files because the shared data is increased only and not decreased and is read-only and not written.

A storage management module is responsible for abstract management, maintenance, and update of a storage hardware resource.

A data management module provides a unified interface for accessing an executable file and a dynamic library, uses a unified data structure to organize shared data, and provides a shared data management capability based on the storage management module.

A communication module implements data communication and interaction with the dynamic loader.

The dynamic loader is mainly responsible for mapping a dynamic library into process address space and relocating a symbol of the dynamic library. The following modules are included.

A communication module implements data communication and interaction with the preloading process.

A multi-thread management module provides a capability of loading dynamic library files in parallel and parsing symbols in parallel.

A data management module provides a data structure representation and an access interface that are of the shared data and that are obtained from the preloading process.

A file loading module obtains, based on the shared data, a dynamic library on which a process depends, to avoid dependency parsing; obtains a path of the dynamic library based on the shared data, to avoid multipath searching for the dynamic library; and obtains, based on the shared data, file format information of the dynamic library, including a mapping range, to avoid file format parsing.

A symbol parsing module implements symbol search and relocation based on the shared data.

Refer to FIG. 4. Steps performed on a preloading process side include:
S401: A kernel starts a preloading process.

Before all user processes are started, the system kernel starts the preloading process.

S402: Allocate a shared internal memory, and initialize a global dynamic library list and a global symbol table on the shared internal memory.

The shared internal memory is used to store shared data, namely, data obtained by the preloading process by parsing a target file. The shared data may be stored in a form of global target file list and global symbol table. Each item in the global target file list may store a parsing result of one target file (an executable file or a dynamic library file). Each item in the global symbol table may store one symbol and related information of the symbol.

S403: Parse a to-be-parsed file in a to-be-parsed file list.

Specifically, the preloading process reads the to-be-parsed list, creates a parsing task for the to-be-parsed file in the to-be-parsed file list, and adds the parsing task to a thread task queue. An idle thread obtains the parsing task from the thread task queue, obtains the to-be-parsed file through a parsing module interface, and parses the to-be-parsed file. If the to-be-parsed file further depends on other dynamic library files, parsing tasks need to be further created for these dynamic library files, and the parsing tasks are added to the thread task queue.

In some embodiments, a plurality of threads may parse these dynamic library files in parallel. For example, a first thread parses a dynamic library 1 and a second thread parses a dynamic library 2. The first thread and the second thread are two different threads in a process.

The to-be-parsed file list may be configured by a user, that is, the user selects to-be-parsed files that need to be preloaded, or the to-be-parsed file list may be configured with some default files that need to be parsed. Each element in the to-be-parsed file list may represent a name and/or a path of a to-be-parsed file. The preloading process may find the to-be-parsed file in a disk based on the name and/or the path of the to-be-parsed file.

The to-be-parsed file may include an executable file and a dynamic library file. An example in which the to-be-parsed file is an executable file is used for description. The preloading process requires an executable file for parsing. Specifically, the following steps may be included:
(1) Obtain dynamic libraries on which the executable file depends. The dynamic libraries on which the executable file depends include a dynamic library on which the executable file directly depends and a dynamic library on which the executable file indirectly depends, that is, all dynamic libraries on which the executable file depends during running.
(2) Based on names of the dynamic libraries, search for the dynamic libraries on which the executable file depends in some specified paths or default paths in the disk, for example, search for the dynamic libraries in a plurality of paths such as LD_LIBRARY_PATH, /lib, /usr/lib, and a system directory.
(3) Parse the found dynamic libraries to obtain information such as paths, mapping ranges, dependency information, and symbol information of the dynamic libraries. The path of the dynamic library may indicate a location of the dynamic library file in the disk, so that the dynamic loader finds the dynamic library. The mapping range indicates content that needs to be loaded to the internal memory and that is of the dynamic library, so that the dynamic loader loads the dynamic library to the internal memory. The dependency information indicates dynamic libraries on which the dynamic library depends (including a directly dependent dynamic library and an indirectly dependent dynamic library). The symbol information may include, for example, basic information such as a name, a type, and a size of a symbol (for example, a function or a variable) defined in the dynamic library, and information such as a name of the dynamic library in which the symbol is located, and an index of a symbol table in which the symbol is located.

It should be noted that the dynamic library in which the symbol is located is a dynamic library in which the symbol is defined and located. The symbol table in which the symbol is located is a symbol table of the dynamic library in which the symbol is located. The index of the symbol table in which the symbol is located may indicate a location of the symbol in the symbol table or indicate a location of the symbol in the dynamic library in which the symbol is located.

For ease of description, in embodiments of this application, parsing of obtaining the path, the mapping range, and the dependency information of the dynamic library (or the executable file) may be referred to as format parsing, and parsing of obtaining the symbol information of the dynamic library (or the executable file) may be referred to as symbol parsing.

It should be understood that format parsing and symbol parsing may be simultaneously performed, or may be separately performed. This is not limited in embodiments of this application. The path, the mapping range, the dependency information, and the like of the dynamic library (or the executable file) may be referred to as a format parsing result, and the symbol information of the dynamic library may be referred to as a symbol parsing result.

In some embodiments, all dynamic libraries on which the executable file depends may be first obtained, and then unified parsing is performed on these dynamic libraries. Alternatively, one part of dynamic libraries on which the executable file depends may be first obtained, and after the part of dynamic libraries on which the executable file depends is parsed, the other part of dynamic libraries on which the executable file depends is obtained for parsing, until all the dynamic libraries on which the executable file depends are parsed.

If the to-be-parsed file is a dynamic library file, the preloading process further needs to parse the dynamic library file, to obtain information such as a path, a mapping range, dependency information, and symbol information of the dynamic library file. For other dynamic libraries on which the dynamic library depends, refer to the foregoing steps to parse these dynamic libraries. Details are not described herein again.

It should be noted that the executable file may also be understood as a dynamic library file. When the executable file is parsed, information such as a name, a path, dependency information, and symbol information of the executable file may also be obtained.

It should be understood that parsing the to-be-parsed file includes parsing the to-be-parsed file and parsing a dynamic library on which the to-be-parsed file depends.

In this embodiment of this application, a parsing result may be stored in two parts. One part of the parsing result is stored in a form of global target file list, that is, a format parsing result is stored in the form of global target file list. The other part of the parsing result is stored in a form of global symbol table, that is, symbol information (symbol parsing result) is stored in the form of global symbol table.

For example, each item in the global target file list may represent a format parsing result of one target file, for example, information such as a path, a mapping range, and dependency information of the target file. For example, the global target file list may include names of one or more target files and one or more format parsing results, and the names of the one or more target files are in a one-to-one correspondence with the one or more format parsing results. In other words, a format parsing result of a target file may be found in the global target file list based on a name of the target file.

For example, the global target file list may be a structure shown in Table 1. It should be understood that values of an executable file 1, a dynamic library 2, a dynamic library 3, a dynamic library 4, and a dynamic library 5 are not filled in Table 1. In an actual parsing process, the values corresponding to the executable file 1, the dynamic library 2, the dynamic library 3, the dynamic library 4, and the dynamic library 5 may be separately filled in Table 1.

**Table 1 Structure of a global target file list**

| Target file name | Path | Mapping range | Dependency information |
|---|---|---|---|
| Executable file 1 | | | |
| Dynamic library 2 | | | |
| Dynamic library 3 | | | |
| Dynamic library 4 | | | |
| Dynamic library 5 | | | |

It should be understood that the global target file list may alternatively be another type of data structure. This is not limited in embodiments of this application. The foregoing example of the global target file list should not constitute any limitation on embodiments of this application.

In some embodiments, when a request message for obtaining a format parsing result is received, a corresponding format parsing result may be found based on a file name (or a file path) carried in the request message. Then, format parsing results of all dynamic libraries on which a file depends are obtained based on dependency information of the file. For example, when a request message including the executable file 1 is received, dependency information of the executable file 1 is found in the global target file list. If the executable file 1 depends on the dynamic library 2 and the dynamic library 3, the dynamic library 2 and the dynamic library 3 are found in the global target file list. If the dynamic library 2 further depends on the dynamic library 4, the dynamic library 4 further needs to be found in the global target file list. Finally, format parsing results of the dynamic library 2, the dynamic library 3, and the dynamic library 4 are packaged and sent to a requester.

It should be understood that, in the foregoing example, the dependency information of the executable file 1 may record information such as names or paths of the dynamic library 2, the dynamic library 3, and the dynamic library 4, or may record indexes of the dynamic library 2, the dynamic library 3, and the dynamic library 4 in the global target file list, so that the format parsing results of the dynamic libraries on which the executable file 1 depends can be quickly found.

The global symbol table may be used to store symbol information of all parsed dynamic libraries. Each item in the global symbol table may represent a symbol and related information of the symbol, for example, information such as a name of the symbol, a name of a dynamic library to which the symbol belongs, and an index of a symbol table in which the symbol is located. In other words, in the global symbol table, information such as the name of the dynamic library in which the symbol is located and the index of the symbol table in which the symbol is located may be found based on the name of the symbol.

It should be understood that the symbol in the global symbol table is information about a symbol defined in the parsed dynamic library.

For example, the global symbol table may be a structure shown in Table 2. It should be understood that values corresponding to a symbol 1, a symbol 2, and a symbol 2 are not filled in Table 2. In an actual parsing process, the values corresponding to the symbol 1, the symbol 2, and the symbol 2 may be separately filled in Table 2.

**Table 1 Structure of a global symbol table**

| Symbol name | Name of a target file to which a symbol belongs | Index of a symbol table in which the symbol is located |
|---|---|---|
| Symbol 1 | | |
| Symbol 2 | | |
| Symbol 3 | | |

In some embodiments, the index of the symbol table in which the symbol is located may alternatively be location information of the symbol in the target file to which the symbol belongs, or may be an offset of the symbol in the target file to which the symbol belongs.

It should be understood that the global symbol table may alternatively be another type of data structure. For example, the global symbol table may alternatively be a hash table or a linked list. This is not limited in embodiments of this application. The foregoing example of the global symbol table should not constitute any limitation on embodiments of this application.

It should be noted that the name of the target file, the name of the executable file, the name of the dynamic library file, the name of the symbol, or the like in embodiments of this application may be an identifier or an ID, and is used to uniquely identify the file or the symbol. The identifier or the ID may include, for example, a segment of digits or letters.

S404: Create a communication server, to monitor a connection and a request of a communication client.

For each received request message, a request task is created and placed in the thread task queue. The idle thread may obtain the request task from the thread task queue, and process the request task.

S405: Receive the request message sent by the dynamic loader, and determine a type of the request message.

In this embodiment of this application, there may be two types of request messages: a target file list request and a global symbol table request. The target file list request or the global symbol table request may carry a name or a path of an executable file loaded in a user process. The target file list request is used to request a format parsing result of the executable file, and the global symbol table request is used to request to obtain a global symbol table.

For ease of description, the target file list request is referred to as a first request message, and the global symbol table request is referred to as a second request message.

S406: If the first request message is received, return a first target file list.

If the first request message is received, the global target file list is searched for, based on a name (or a path) of the executable file loaded in the user process, format parsing results of dynamic libraries on which the executable file depends.

If corresponding format parsing results are found, the first target file list is generated based on these format parsing results, and is returned to the dynamic loader. The first target file list is a dedicated target file list of the executable file. A structure of the first target file list is similar to a structure of the global target file list, and each item in the first target file list represents a format parsing result of one dynamic library on which the executable file depends. The first target file list does not include a format parsing result of a dynamic library on which the executable file does not depend.

For example, when a first request message including the executable file 1 is received, dependency information of the executable file 1 is found in the global target file list. If the executable file 1 depends on the dynamic library 2 and the dynamic library 3, the dynamic library 2 and the dynamic library 3 are found in the global target file list. If the dynamic library 2 further depends on the dynamic library 4, the dynamic library 4 further needs to be found in the global target file list. Finally, format parsing results of the dynamic library 2, the dynamic library 3, and the dynamic library 4 are packaged in the first target file list and sent to the dynamic loader or the user process.

It should be understood that, in the foregoing example, the dependency information of the executable file 1 may record information such as names or paths of the dynamic library 2, the dynamic library 3, and the dynamic library 4, or may record indexes of the dynamic library 2, the dynamic library 3, and the dynamic library 4 in the global target file list, so that the format parsing results of the dynamic libraries on which the executable file 1 depends can be quickly found.

It should be noted that different executable files have different dedicated target file lists. For example, the preloading process may receive a plurality of first request messages. For example, one first request message carries a path of the executable file 1, and another first request message carries a path of the executable file 2. A dedicated target file list of the executable file 1 includes the format parsing result of the dynamic library on which the executable file 1 depends, and a dedicated target file list of the executable file 2 includes the format parsing result of the dynamic library on which the executable file 2 depends.

If the format parsing result of the dynamic library on which the executable file depends does not exist, a format parsing task is created for the executable file and added to the thread task queue. The idle thread obtains the format parsing task, performs format parsing on the executable file, obtains a format parsing result of the executable file and a format parsing result of the dynamic library on which the executable file depends, and returns the format parsing results to the dynamic loader.

In some embodiments, after format parsing of the executable file is completed, the format parsing result of the executable file and the format parsing result of the dynamic library on which the executable file depends are stored, and these format parsing results are stored in the global target file list.

In some embodiments, format parsing tasks are separately created for the executable file and the dynamic library on which the executable file depends, and are added to the thread task queue. A plurality of idle threads may separately obtain format parsing tasks, and perform, in parallel, format parsing on an executable file and a dynamic library file on which the executable file depends.

It should be understood that the plurality of idle threads are a plurality of different threads in process address space.

S407: If the second request message is received, return the global symbol table.

If the second request message is received, it is determined, based on the name (or the path) of the executable file loaded in the user process, whether symbol parsing has been performed on the executable file. If symbol parsing has been performed on the executable file, the global symbol table is returned to the dynamic loader.

Optionally, if the second request message is received, information such as a handle, an address, or a pointer of the global symbol table is returned. The dynamic loader may access or read the global symbol table based on the information such as the handle, the address, or the pointer of the global symbol table.

If symbol parsing is not performed on the executable file, a symbol parsing task is created for the executable file and added to the thread task queue. The idle thread obtains the symbol parsing task, performs symbol parsing on the executable file, obtains symbol information of the executable file and the dynamic library on which the executable file depends, stores the symbol information in the global symbol table, and then returns the global symbol table to the dynamic loader.

In some embodiments, symbol parsing tasks are separately created for the executable file and the dynamic library on which the executable file depends and added to the thread task queue. A plurality of idle threads may separately obtain symbol parsing tasks, and perform, in parallel, symbol parsing on the executable file and the dynamic library file on which the executable file depends.

In some embodiments, the preloading process may maintain a parsed file list, to store a name or a path of an executable file (or a dynamic library file) that has been parsed. Therefore, when the request message is received, whether the executable file (or the dynamic library file) has been parsed may be determined based on the parsed file list and the name or path of the executable file (or the dynamic library file).

In some embodiments, because the global target file list records information about all parsed files, the global target file list may be used as the parsed file list.

Refer to FIG. 3 and FIG. 4. The steps performed on the dynamic loader side may include:
S408: The kernel starts the user process.

Specifically, initialization of the process address space and a stack and loading of information such as code of the executable file are dynamically loaded by the dynamic loader.

S409: Create the communication client, and establish a connection to the communication server.

It should be understood that the communication server and the communication client are a means of inter-process communication. In addition, the inter-process communication may be implemented by using another method. This is not limited in embodiments of this application.

S410: Send the first request message and/or the second request message, and correspondingly receive the first target file list and/or the global symbol table.

The first request message or the second request message may include the name or the path of the executable file loaded in the user process. The first request message is used to request to obtain the format parsing result of the executable file, and the first request message is used to request to obtain the global symbol table.

It should be noted that the first target file list is the dedicated target file list of the executable file. A structure of the first target file list is similar to a structure of the global target file list, and each item in the first target file list represents a format parsing result of one dynamic library on which the executable file depends. The first target file list does not include a format parsing result of a dynamic library on which the executable file does not depend.

It should be noted that, generally, the dynamic loader may first send the first request message, and then send the second request message after all dynamic libraries on which the executable file depends are mapped into the process address space.

S411: Traverse the first target file list, and map the dynamic library on which the executable file depends into the process address space.

Specifically, a loading task is created for each dynamic library in the first target file list, and the loading task is added to the thread task queue. The idle thread executes the loading task, and maps the dynamic library into the process address space based on a format parsing result corresponding to the dynamic library. For example, the dynamic library file is first searched for based on the path of the dynamic library, and then to-be-loaded content is mapped into the process address space based on the mapping range of the dynamic library.

In some embodiments, a plurality of idle processes may separately execute loading tasks, and simultaneously map a plurality of dynamic libraries into the process address space, to reduce loading time of the dynamic libraries.

S412: Perform relocation after the dynamic library on which the executable file depends is mapped into the process address space.

Specifically, a relocation task is created for each dynamic library in the first target file list, and the relocation task is added to the thread task queue. The idle thread executes the relocation task, obtains a relocation table of the dynamic library, traverses the relocation table, and obtains a to-be-relocated symbol. Then, the global symbol table is searched for a name of a dynamic library in which the to-be-relocated symbol is located and an index of a symbol table in which the to-be-relocated symbol is located. Then, the to-be-relocated symbol is found in the symbol table in which the to-be-relocated symbol is located based on the index of the symbol table in which the to-be-relocated symbol is located, to obtain an address of the to-be-relocated symbol in the process address space, so as to complete relocation.

In some embodiments, a plurality of idle processes may separately execute relocation tasks, and simultaneously relocate to-be-relocated symbols in a plurality of dynamic libraries.

It should be noted that, in a relocation process, an address of a to-be-relocated symbol in the process address space may be usually updated to a location that references the relocation symbol.

It should be noted that the relocation table of the dynamic library records all symbols that need to be relocated in the dynamic library. The symbol table of the dynamic library records information such as a symbol defined in the dynamic library, a name of the symbol, a type of the symbol, and a location of the symbol in the dynamic library.

In some embodiments, when the to-be-relocated symbol is found in the symbol table in which the to-be-relocated symbol is located, a relative location of the to-be-relocated symbol in the dynamic library to which the to-be-relocated symbol belongs may be obtained. Then, the address of the symbol in the process address space may be determined with reference to an address of the dynamic library to which the symbol belongs in the process address space.

Optionally, if a plurality of duplicate dynamic libraries are found in the global symbol table based on the name of the to-be-relocated symbol, a conventional procedure is returned to search for the to-be-relocated symbol, to complete relocation.

S413: Execute a main function of the user process, to complete startup of the user process.

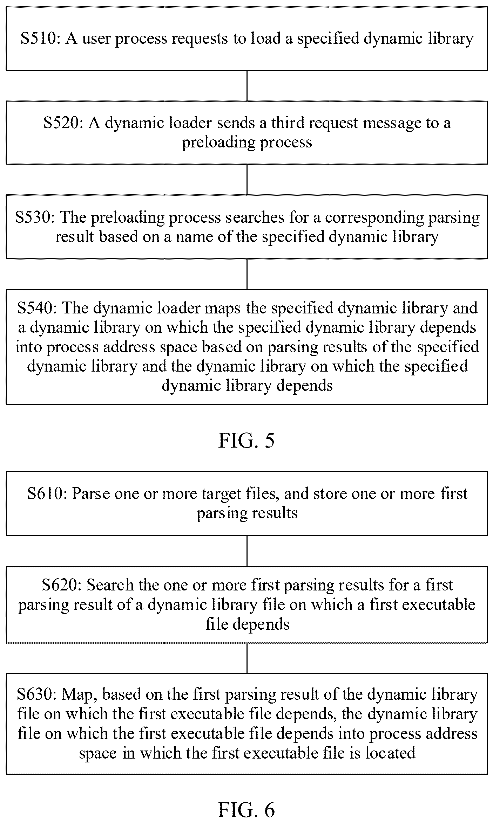

FIG. 5 is a schematic flowchart of a dynamic loading method according to an embodiment of this application. As shown in FIG. 5, the method includes the following steps.

S510: A user process requests to load a specified dynamic library.

In a startup process of the user process, the user process may request to load the specified dynamic library. For example, the user process may use a dlopen function to load a dynamic library with a specified file name or a specified file path.

S520: A dynamic loader sends a third request message to a preloading process.

The third request message may carry the name or the path of the specified dynamic library, and is used to request to obtain a format parsing result or a global symbol table of the specified dynamic library.

S530: The preloading process searches for a corresponding format parsing result based on the name of the specified dynamic library.

Based on the name or path of the specified dynamic library, the global target file list is searched for format parsing results of the specified dynamic library and a dynamic library on which the specified dynamic library depends.

Optionally, if no corresponding format parsing result is found, a loading task and a symbol parsing task of the specified dynamic library are created, to obtain format parsing results and symbol information of the specified dynamic library and the dynamic library on which the specified dynamic library depends. In addition, the format parsing result of the specified dynamic library is stored in a global target file list, and the symbol information of the specified dynamic library is stored in the global symbol table.

In some embodiments, the third request message may be included in a first request message, that is, the first request message may carry a name (or a path) of an executable file loaded in the user process and the name (or the path) of the specified dynamic library. The preloading process finds, in the global target file list based on the name (or path) of the executable file and the name (or path) of the specified dynamic library, all format parsing results related to the executable file and the specified dynamic library, packs the parsing results, and sends the packaged parsing results to the dynamic loader.

In some embodiments, after symbol parsing is performed on the specified dynamic library and the dynamic library on which the specified dynamic library depends, an updated global symbol table is returned to the dynamic loader.

Optionally, the dynamic loader sends a second request message to the preloading process, to request the global symbol table.

S540: The dynamic loader maps the specified dynamic library and the dynamic library on which the specified dynamic library depends into process address space based on the format parsing results of the specified dynamic library and the dynamic library on which the specified dynamic library depends.

Optionally, a to-be-relocated symbol in the specified dynamic library is relocated based on the global symbol table and a relocation table of the specified dynamic library.

FIG. 6 is a schematic flowchart of a dynamic loading method according to an embodiment of this application. As shown in FIG. 6, the method includes the following steps.

S610: Parse one or more target files, and store one or more first parsing results.

It should be understood that the one or more target files may include a first target file, and the first target file may be an executable file or a dynamic library file.

It should be understood that there may be a dependency relationship or no dependency relationship between the one or more target files. This is not limited in embodiments of this application.

In this embodiment of this application, the one or more first parsing results are in a one-to-one correspondence with the one or more target files. A first parsing result of the first target file (for example, a first dynamic library file) may include a name, a path, a mapping range, and dependency information of the first target file. The path of the first target file may indicate a location at which the first target file is stored in a disk. The dependency information of the first target file may indicate a dynamic library file on which the first target file depends, including a dynamic library file on which the first target file directly depends and a dynamic library file on which the first target file indirectly depends. The mapping range of the first target file may indicate a range of files that are of the first target file and that need to be mapped into process address space, namely, to-be-loaded content of the first target file.

Optionally, the first target file is a file in a to-be-parsed file list, and a file in the to-be-parsed file list is a file that needs to be parsed before a first executable file is loaded into process address space in which the first executable file is located. In other words, the file in the to-be-parsed file list is a file that needs to be pre-parsed.

It should be noted that, the first executable file may be, for example, an executable file that is of a program and that is loaded in a user process, and the process address space is internal memory space allocated by a system to the user process.

It should be noted that the file in to-be-parsed file list may be a file configured by a user, or may be a default file that needs to be pre-parsed.

It should be noted that the one or more target files may be files in the to-be-parsed file list, or may not be files in the to-be-parsed file list. For example, when a second executable file is started, a dynamic loader may need to parse the second executable file and a dynamic library file on which the second executable file depends. In this case, a first parsing result of the second executable file and a first parsing result of the dynamic library file on which the second executable file depends may be stored, so that when another executable file is loaded, a first parsing result of a dynamic library file required by the another executable file is searched.

It should be noted that the first parsing result may be, for example, a format parsing result in an embodiment shown in FIG. 4, and the one or more first parsing results may be, for example, stored in a form of global target file list in the embodiment shown in FIG. 4.

Optionally, the one or more target files are parsed in multi-thread parallelism, and the one or more first parsing results are stored.

S620: Search the one or more first parsing results for a first parsing result of a dynamic library file on which the first executable file depends.

Optionally, the one or more first parsing results are searched for parsing results of the second dynamic library file and the dynamic library file on which the second dynamic library file depends, where the second dynamic library file is a specified dynamic library file that a process in which the first executable file is located requests to load. Based on the parsing results of the second dynamic library file and the dynamic library file on which the second dynamic library file depends, the second dynamic library file and the dynamic library file on which the second dynamic library file depends are mapped into the process address space.

Optionally, if the first parsing result of the dynamic library file on which the first executable file depends does not exist, the first executable file is parsed, and a first parsing result of the first executable file and a first parsing result of the dynamic library file on which the first executable file depends are stored; and/or if the parsing result of the second dynamic library file does not exist, the second dynamic library file is parsed, and a first parsing result of the second dynamic library file and a first parsing result of the dynamic library file on which the second dynamic library file depends are stored.

S630: Map, based on the first parsing result of the dynamic library file on which the first executable file depends, the dynamic library file on which the first executable file depends into the process address space in which the first executable file is located.

Optionally, the one or more target files may include a first dynamic library file, and the first executable file depends on the first dynamic library file. The first dynamic library file is obtained based on a path of the first dynamic library file, and the first dynamic library file is mapped into the process address space based on a mapping range of the first dynamic library file.

Optionally, the dynamic library file on which the first executable file depends includes a third dynamic library file and a fourth dynamic library file, and a first thread maps, based on a first parsing result of the third dynamic library file, the third dynamic library file into the process address space in which the first executable file is located. A second thread maps the fourth dynamic library file into the process address space based on a first parsing result of the fourth dynamic library file, where the first thread is different from the second thread.

Optionally, the one or more target files are parsed, and information about one or more symbols is stored. The one or more symbols are symbols defined in the one or more target files, the one or more symbols include a first symbol, and information about the first symbol includes a name of a target file to which the first symbol belongs and location information of the first symbol in the target file to which the first symbol belongs.

Optionally, after the dynamic library file on which the first executable file depends is mapped into the process address space in which the first executable file is located, the information about the one or more symbols is searched for information about a second symbol. The information about the second symbol is used to relocate the second symbol.

Optionally, an address of the second symbol in the process address space is obtained based on the information about the second symbol, and the second symbol is relocated based on the address of the second symbol in the process address space.

Optionally, when the first executable file and the dynamic library file on which the first executable file depends are not in a parsed file list, the first executable file and the dynamic library file on which the first executable file depends are parsed, and information about symbols defined in the first executable file and the dynamic library file on which the first executable file depends are stored. The parsed file list is used to store a name of a parsed executable file or dynamic library file.

Optionally, the one or more target files are parsed in multi-thread parallelism, and the information about one or more symbols is stored.

In this embodiment of this application, when target files are parsed, first parsing results of the target files may be stored. These first parsing results are used in loading processes of dynamic libraries, to implement decoupling between parsing processes and loading processes of the target files, thereby helping optimize a startup speed of an application and improving user experience. In another aspect, a first parsing result of one target file may be used in loading processes of a plurality of different executable files, to implement sharing of the one or more first parsing results. This helps save computing resources and internal memory space.

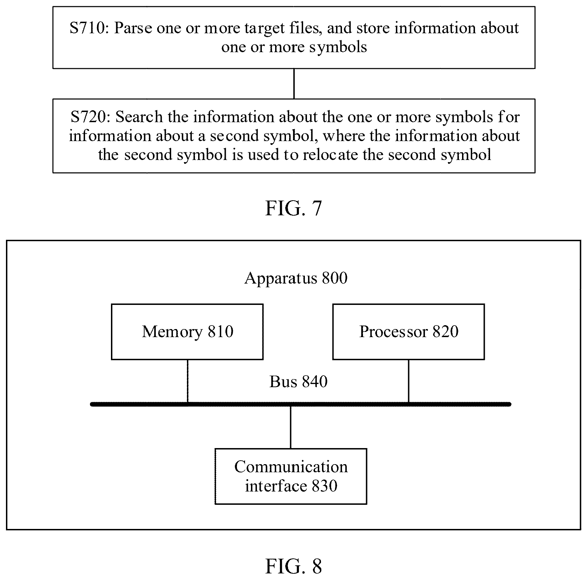

FIG. 7 is a schematic flowchart of a dynamic loading method according to an embodiment of this application. As shown in FIG. 7, the method includes the following steps.

S710: Parse one or more target files, and store information about one or more symbols.

It should be understood that the one or more target files may include a first target file, and the first target file may be an executable file or a dynamic library file.

It should be understood that there may be a dependency relationship or no dependency relationship between the one or more target files. This is not limited in embodiments of this application.

In this embodiment of this application, the one or more symbols are symbols defined in the one or more target files, and include all symbols defined in each target file.

It should be noted that, a first executable file may be, for example, an executable file that is of a program and that is loaded in a user process, and process address space is internal memory space allocated by a system to the user process.

It should be noted that information about each symbol may be, for example, a symbol parsing result in the embodiment shown in FIG. 4, and the information about the one or more symbols may be stored, for example, in a form of global symbol table in the embodiment shown in FIG. 4.

Optionally, the first target file is a file in a to-be-parsed file list, and a file in the to-be-parsed file list is a file that needs to be parsed before the first executable file is loaded into process address space in which the first executable file is located. In other words, the file in the to-be-parsed file list is a file that needs to be pre-parsed.

It should be noted that the file in to-be-parsed file list may be a file configured by the user, or may be a default file that needs to be pre-parsed.

It should be noted that the one or more target files may be files in the to-be-parsed file list, or may not be files in the to-be-parsed file list.

Optionally, the one or more target files are parsed in multi-thread parallelism, and the information about one or more symbols is stored.

S720: Search the information about the one or more symbols for information about a second symbol, where the information about the second symbol is used to relocate the second symbol.

It should be noted that the second symbol is a symbol in a relocation table of a dynamic library file on which the first executable file depends. The relocation table records a symbol that needs to be relocated in the dynamic library file on which the first executable file depends.

Optionally, an address of the second symbol in the process address space in which the first executable file is located is obtained based on the information about the second symbol, and the second symbol is relocated based on the address of the second symbol in the process address space.

Optionally, when the first executable file or the dynamic library file on which the first executable file depends is not in a parsed file list, the first executable file and the dynamic library file on which the first executable file depends are parsed, and information about symbols defined in the first executable file and the dynamic library file on which the first executable file depends are stored. The parsed file list is used to store a name of a parsed executable file or dynamic library file.

In some embodiments, because a global target file list records information about all parsed files, the global target file list may be used as the parsed file list.

In this embodiment of this application, when the target file is parsed, information about a symbol defined in the target file may be stored. In this embodiment of this application, when the target file is parsed, information about a symbol defined in the target file may be stored. When a to-be-relocated symbol is relocated, a location of the to-be-relocated symbol in the process address space can be quickly found, thereby accelerating a relocation process, helping optimize a startup speed of an application, and helping improve user experience. In another aspect, the information about the one or more symbols may be used in relocation processes of a plurality of different executable files, to implement sharing of the information about the one or more symbols. This helps save computing resources and internal memory space.

FIG. 8 is a diagram of a hardware structure of an apparatus 800 according to an embodiment of this application. The apparatus 800 (the apparatus 800 may be specifically an electronic device) shown in FIG. 8 includes a memory 810, a processor 820, a communication interface 830, and a bus 840. The memory 810, the processor 820, and the communication interface 830 implement mutual communication connections through the bus 840.

The memory 810 may be a ROM, a static storage device, a dynamic storage device, or a RAM. The memory 810 may store a program. When the program stored in the memory 810 is executed by the processor 820, the processor 820 is configured to perform steps of the dynamic loading method in embodiments of this application.

The processor 820 may be a general-purpose CPU, a microprocessor, an ASIC, a GPU, or one or more integrated circuits, and is configured to execute a related program, to implement functions that need to be performed by units in the apparatus 800 in embodiments of this application, or perform the dynamic loading method in the method embodiments of this application.

The processor 820 may alternatively be an integrated circuit chip and has a signal processing capability. In an implementation process, steps of the dynamic loading method in this application may be completed by using an integrated logic circuit of hardware in the processor 820 or instructions in a form of software. The processor 820 may alternatively be a general-purpose processor, a DSP, an ASIC, an FPGA or another programmable logic device, a discrete gate or transistor logic device, or a discrete hardware component. The processor 820 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 810. The processor 820 reads information in the memory 810, and completes, in combination with hardware of the processor 820, functions that need to be performed by the units included in the apparatus 800 in embodiments of this application, or performs the dynamic loading method in the method embodiments of this application.

The communication interface 830 uses a transceiver apparatus, for example but not limited to, a transceiver, to implement communication between the apparatus 800 and another device or a communication network.

The bus 840 may include a path for transmitting information between the components (for example, the memory 810, the processor 820, and the communication interface 830) of the apparatus 800.

It should be noted that although the apparatus 800 shown in FIG. 8 only shows the memory, the processor, and the communication interface, in a specific implementation process, a person skilled in the art should understand that the apparatus 800 further includes other components that are necessary to implement normal running. In addition, based on a specific requirement, a person skilled in the art should understand that the apparatus 800 may further include hardware components for implementing other additional functions. In addition, a person skilled in the art should understand that the apparatus 800 may include only components required for implementing embodiments of this application, but not necessarily include all the components shown in FIG. 8.

An embodiment of this application further provides a chip. The chip includes a processor and a communication interface. The communication interface is configured to receive a signal and transmit the signal to the processor. The processor processes the signal, so that the dynamic loading method according to any one of the foregoing possible implementations is performed.

An embodiment further provides a computer-readable storage medium. The computer-readable storage medium stores computer instructions. When the computer instructions are run on a computer, the dynamic loading method in the foregoing embodiments is performed.

An embodiment further provides a computer program product. When the computer program product runs on a computer, the computer is enabled to perform the foregoing related steps, so that the dynamic loading method in the foregoing embodiments is performed.

The foregoing embodiments may be used separately, or may be used in combination to implement different technical effect.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application. However, it should not be considered that the implementation goes beyond the scope of this application.

In this embodiment, the electronic device may be divided into functional modules based on the foregoing method examples. For example, each functional module may be obtained through division based on each corresponding function, or two or more functions may be integrated into one processing module. The integrated module may be implemented in a form of hardware. It should be noted that, in this embodiment, module division is an example, and is merely logical function division. During actual implementation, another division manner may be used.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The computer software product is stored in a storage medium, and includes several instructions for enabling a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A dynamic loading method, comprising:
parsing one or more target files, and storing one or more first parsing results, wherein the one or more first parsing results are in a one-to-one correspondence with the one or more target files, the one or more target files comprise a first target file, and the first target file is an executable file or a dynamic library file;
searching the one or more first parsing results for a first parsing result of a dynamic library file on which a first executable file depends; and
mapping, based on the first parsing result of the dynamic library file on which the first executable file depends, the dynamic library file on which the first executable file depends into process address space in which the first executable file is located.

2. The method according to claim 1, wherein the one or more target files comprise a first dynamic library file, and the first parsing result comprises a path, a mapping range, and dependency information of the first dynamic library file.

3. The method according to claim 2, wherein the dynamic library file on which the first executable file depends comprises the first dynamic library file; and
mapping, based on the first parsing result of the dynamic library file on which the first executable file depends, the dynamic library file on which the first executable file depends into the process address space in which the first executable file is located comprises:
obtaining the first dynamic library file based on the path of the first dynamic library file; and
mapping the first dynamic library file into the process address space based on the mapping range of the first dynamic library file.

4. The method according to any one of claims 1 to 3, wherein the first target file is a file in a to-be-parsed file list, and a file in the to-be-parsed file list is a file that needs to be parsed before the first executable file is loaded into the process address space.

5. The method according to any one of claims 1 to 4, wherein the method further comprises:
searching the one or more first parsing results for first parsing results of a second dynamic library file and a dynamic library file on which the second dynamic library file depends, wherein the second dynamic library file is a specified dynamic library file that a process in which the first executable file is located requests to load; and
mapping, based on the first parsing results of the second dynamic library file and the dynamic library file on which the second dynamic library file depends, the second dynamic library file and the dynamic library file on which the second dynamic library file depends into the process address space.

6. The method according to claim 5, wherein the method further comprises:
if the first parsing result of the dynamic library file on which the first executable file depends is not found, parsing the first executable file, and storing a first parsing result of the first executable file and a first parsing result of the dynamic library file on which the first executable file depends; and/or
if the first parsing result of the second dynamic library file is not found, parsing the second dynamic library file, and storing a first parsing result of the second dynamic library file and a first parsing result of the dynamic library file on which the second dynamic library file depends.

7. The method according to any one of claims 1 to 6, wherein parsing the one or more target files, and storing the one or more first parsing results comprise:
parsing the one or more target files in multi-thread parallelism, and storing the one or more first parsing results.

8. The method according to claim 1, wherein the dynamic library file on which the first executable file depends comprises a third dynamic library file and a fourth dynamic library file; and
mapping, based on the first parsing result of the dynamic library file on which the first executable file depends, the dynamic library file on which the first executable file depends into the process address space in which the first executable file is located comprises:
mapping, by a first thread based on a first parsing result of the third dynamic library file, the third dynamic library file into the process address space in which the first executable file is located; and
mapping, by a second thread, the fourth dynamic library file into the process address space based on a first parsing result of the fourth dynamic library file, wherein the first thread is different from the second thread.

9. The method according to any one of claims 1 to 8, wherein the method further comprises:
parsing the one or more target files, and storing information about one or more symbols, wherein the one or more symbols are symbols defined in the one or more target files, the one or more symbols comprise a first symbol, and information about the first symbol comprises a name of a target file to which the first symbol belongs and location information of the first symbol in the target file to which the first symbol belongs.

10. The method according to claim 9, wherein the dynamic library file on which the first executable file depends comprises a fifth dynamic library file, a relocation table of the fifth dynamic library file comprises a second symbol, and the method further comprises:
after the dynamic library file on which the first executable file depends is mapped into the process address space in which the first executable file is located, searching the information about the one or more symbols for information about the second symbol, wherein the information about the second symbol is used to relocate the second symbol.

11. The method according to claim 10, wherein the method further comprises:
obtaining an address of the second symbol in the process address space based on the information about the second symbol; and
relocating the second symbol based on the address of the second symbol in the process address space.

12. The method according to any one of claims 9 to 11, wherein the method further comprises:
when the first executable file and the dynamic library file on which the first executable file depends are not in a parsed file list, parsing the first executable file and the dynamic library file on which the first executable file depends, and storing information about symbols defined in the first executable file and the dynamic library file on which the first executable file depends, wherein the parsed file list is used to store a name of a parsed executable file or dynamic library file.

13. The method according to any one of claims 9 to 12, wherein parsing the one or more target files, and storing the information about the one or more symbols comprise:
parsing the one or more target files in multi-thread parallelism, and storing the information about the one or more symbols.

14. A dynamic loading method, comprising:
parsing one or more target files, and storing information about one or more symbols, wherein the one or more symbols are symbols defined in the one or more target files, the one or more symbols comprise a first symbol, information about the first symbol comprises a name of a target file to which the first symbol belongs and location information of the first symbol in the target file to which the first symbol belongs, the one or more target files comprise a first target file, and the first target file is an executable file or a dynamic library file; and
searching the information about the one or more symbols for information about a second symbol, wherein the second symbol is a symbol in a relocation table of a dynamic library file on which a first executable file depends, and the information about the second symbol is used to relocate the second symbol.

15. The method according to claim 14, wherein the method further comprises:
obtaining, based on the information about the second symbol, an address of the second symbol in process address space in which the first executable file is located; and
relocating the second symbol based on the address of the second symbol in the process address space.

16. The method according to claim 14 or 15, wherein the first target file is a file in a to-be-parsed file list, and a file in the to-be-parsed file list is a file that needs to be parsed before the first executable file is loaded into the process address space.

17. The method according to any one of claims 14 to 16, wherein the method further comprises:
when the first executable file or the dynamic library file on which the first executable file depends is not in a parsed file list, parsing the first executable file and the dynamic library file on which the first executable file depends, and storing information about symbols defined in the first executable file and the dynamic library file on which the first executable file depends, wherein the parsed file list is used to store a name of a parsed executable file or dynamic library file.

18. The method according to any one of claims 14 to 17, wherein parsing the one or more target files, and storing the information about the one or more symbols comprise:
parsing the one or more target files in multi-thread parallelism, and storing the information about the one or more symbols.

19. An electronic device, comprising one or more processors and one or more memories, wherein the one or more memories store one or more computer programs, the one or more computer programs comprise instructions, and when the instructions are executed by the one or more processors, the method according to any one of claims 1 to 13 is performed, or the method according to any one of claims 14 to 18 is performed.

20. A chip, wherein the chip comprises a processor and a communication interface, the communication interface is configured to receive a signal and transmit the signal to the processor, and the processor processes the signal, so that the method according to any one of claims 1 to 13 is performed, or the method according to any one of claims 14 to 18 is performed.

21. A computer-readable storage medium, wherein the computer-readable storage medium stores computer instructions, and when the computer instructions are run on a computer, the method according to any one of claims 1 to 13 is performed, or the method according to any one of claims 14 to 18 is performed.

22. A computer program product comprising instructions, wherein when the computer program product runs on a computer, the computer is enabled to perform the method according to any one of claims 1 to 13 or perform the method according to any one of claims 14 to 18.
